Europäisches Patentamt

European Patent Office

Office européen des brevets

(19)

(11) Publication number: **0 275 332 B1**

## EUROPEAN PATENT SPECIFICATION

(12)

(45) Date of publication of patent specification: **15.04.92** (51) Int. Cl.⁵: **A61C 13/225**

(21) Application number: **87100260.6**

(22) Date of filing: **12.01.87**

(54) **Dental attachment.**

(43) Date of publication of application:
**27.07.88 Bulletin 88/30**

(45) Publication of the grant of the patent:
**15.04.92 Bulletin 92/16**

(84) Designated Contracting States:
**AT BE CH DE ES FR GB GR IT LI LU NL SE**

(56) References cited:
**FR-A- 1 584 920**

**ZWR DAS DEUTSCHE ZAHNARZTEBLATT,
vol. 91, no. 12, December 1982, pages 70-71,
Bhl/Baden, DE; "Arbeitsmittel und Werk-
stoffe"**

(73) Proprietor: **AUDAX DENTAL AG
Granzacherstrasse 30/32
CH-4058 Basel(CH)**

(72) Inventor: **Mundy, Carl Richard
45, Claragraben
CH-4058 Basel(CH)**

(74) Representative: **Patentanwälte Deufel, Hertel,
Lewald
Postfach 26 02 47 Isartorplatz 6
W-8000 München 26(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The invention relates to a dental attachment comprising a patrix section and a matrix section, the matrix section including a matrix body comprising a back panel and two side panels defining a groove, and the patrix section including a patrix body carrying a tongue element for mating with the groove in the matrix section, the patrix section being provided with a split along a portion of the tongue element enabling displacement of the split portion of the tongue element relative to the patrix body.

Patrix-matrix assemblies are of various types and include such structures as axial types in which a patrix or matrix section is fitted into the remaining root of a tooth and in which a mating matrix or patrix section carried in an artificial crown engages with said patrix and matrix in this type of axial assembly, engagement may for example be achieved by the spring action obtained by providing one or more splits in a frustro-conical patrix section which then snap-fits into a mating matrix section. Similarly, the engagement in this type of assembly may be achieved by the spring action obtained by providing one or more splits about the skirt of a frustro-conical matrix section which then snap-fits over a mating patrix section. An alternative to achieve engagement between patrix and matrix sections of this type is to provide a split ring spring in the matrix section which then engages about the neck of a frustro-conical patrix section. Another alternative to achieve this engagement involves a patrix or matrix section, preferably the patrix section, of resilient plastics material enabling press-fitting together of the patrix and matrix sections.

Other types of patrix-matrix assemblies are of non-axial type in which a matrix or patrix section, preferably the matrix section, is carried in an artificial crown which is in turn cemented to a stub of a remaining tooth. The artificial crown may however also be one which has been located onto a root of a remaining tooth by means of an axial type of patrix-matrix assembly of the nature discussed above. The present invention is particularly concerned with a patrix-matrix assembly of the non-axial type in which preferably the matrix section is carried in an artificial crown. In this type of assembly, the matrix section is most conveniently provided at one side of the artificial crown adjacent to a gap between teeth in which gap the dental prothesis is to be located. Generally, there are provided two matrix sections in two artificial crowns at each end of the gap and two patrix sections carried in the prosthesis. In this fashion, the prosthesis is held in place in the gap by a patrix-matrix assembly at each end of the gap.

In the non-axial patrix-matrix assemblies of the nature under consideration, the matrix section is provided with a groove into which a tongue element extending along one side of the patrix section fits. The groove in the matrix section is generally defined by a back panel, two side panels and two inwardly directed flanges. Similarly, the tongue element of the patrix section is generally defined by a front face for fitting adjacent the back panel of the matrix section, two side faces for fitting between the two side panels of the matrix section, two rear faces for fitting adjacent the inner sides of the inwardly directed flanges of the matrix section and a web between the rear faces joining the tongue element to a body of the patrix section which web fits between the ends of the inwardly directed flanges of the matrix section. Generally, the matrix section has a closed bottom against which the end of the tongue element of the patrix section abuts when in place.

Such a prior art dental attachment has become known by the article "Arbeitsmittel und Werkstoffe, Das Deutsche Zahnärzteblatt",Vol. 91, Dec. 1982, No. 12, page 17, "Whaledent-Geschiebe P 3,4", constituting a typical non-axial patrix-matrix assembly.

There are a variety of holding means for holding together the patrix and matrix sections of non-axial patrix-matrix assemblies. One means involves fictional engagement between faces of the tongue element of the patrix section and walls of the matrix section defined by the back panel and by the inwardly directed flanges. There should however then be available adjustment means for adjusting the frictional engagement force to accommodate wear between engaging surfaces or displacements of such surfaces by loads which arise thereon during use. One adjustment means involves provision of a laterally directed split along a portion of the tongue element parallel to its front face. This enables the split portion of the tongue element to be splayed slightly, for example with the aid of a razor blade, and hence provide a greater force between the front face of the tongue element and the back panel of the matrix section and between the two rear faces of the tongue element and the inner sides of the inwardly directed flanges of the matrix section. The splaying of the split portion of the tongue element may also be effected by means of a threaded screw operative between the two split portions of the tongue element.

In non-axial patrix-matrix assemblies of the nature discussed above a major proportion, if not all bending-moment loads between the patrix section and matrix section are carried by the inwardly directed flanges of the matrix section. This can regularly cause distortion or breakage of the matrix section with the result that a new artificial crown carrying a new matrix section needs to be prepared and mounted. Similarly, distortion of the matrix section causes a poor fit between the patrix and matrix sections which, along with continuous needs to splay the split portion of the tongue element of the patrix section, can result in breakage of the tongue element with a consequent need to mount a new patrix section in the prosthesis.

The invention seeks to solve the problem of bringing about a better clamping of the elements in question in order to obviate splaying outwardly directed engagement.

This problem according to the invention is solved with a dental attachment having the following characteristics:

a. the matrix section is provided with at least one inwardly directed rail element disposed on the inner surface of one of the side panels of the matrix body, and

b. the split along the portion of the tongue element extends between the side panels of the matrix body parallel to the back panel when said tongue element is inserted in the groove, and

c. the tongue element is provided with a notch to mate with the inwardly directed rail element so that displacement of the portion of the tongue element towards the patrix body causes the tongue element to clamp against the rail element.

Preferably two rail elements are provided in the matrix section integral with said side panels, the patrix section then being provided with notches at each side of the tongue element for mating with two rail elements.

Advantageously there is provided a threaded screw passing through the split-portion of the tongue element into the body of the patrix section, whereby the clamping action of the tongue element against a rail element in the matrix section can be adjusted.

By the measures of the invention the object is obtained to provide a non-axial patrix-matrix assembly in which bending-moment loads are carried by the matrix section in an improved fashion which reduces risks of distortion or breakage of the matrix section. The construction of the patrix-matrix assembly of the invention also provides an improved patrix section in which risks of breakage of the tongue element are reduced.

The invention will be more clearly understood from the following description with reference to the accompanying drawings showing, by way of example only, one embodiment of a dental attachment in accordance with the invention.

In the drawings:

Figure I shows a front elevation of a matrix section of a dental attachment;

Figure 2 shows a lengthwise cross-section of the matrix section of Figure I taken at II-II;

Figure 3 shows a plan view of the matrix section of Figure I;

Figure 4 shows a front elevation of a patrix section of a dental attachment; and

Figure 5 shows a side elevation of the patrix section of Figure 4 which has been partly cut away.

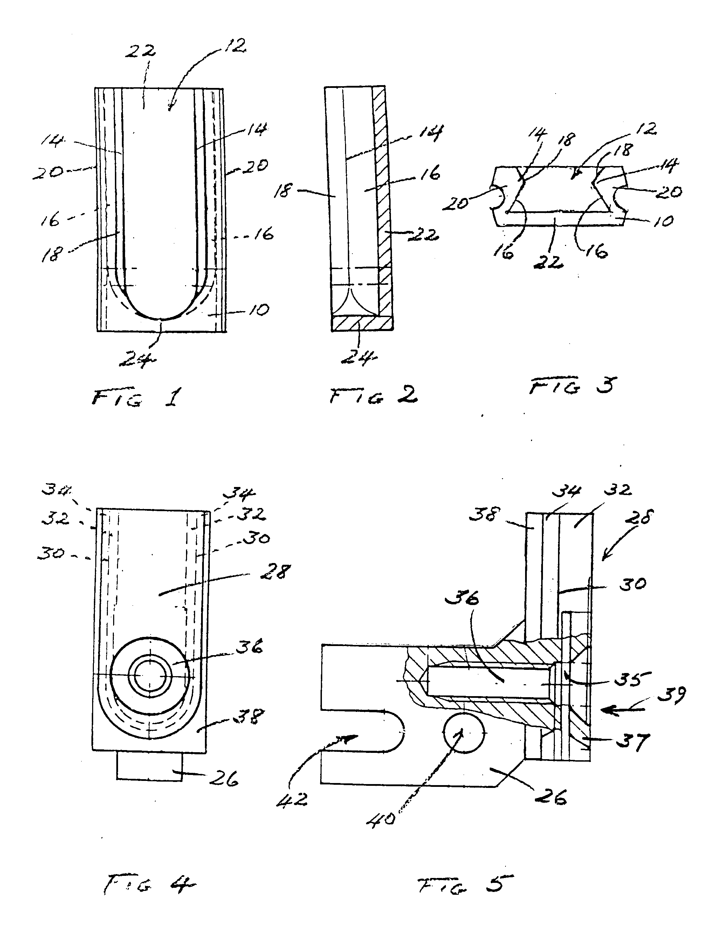

Referring to Figures 1, 2 and 3 of the drawings, showing a matrix section in accordance with the invention, reference numeral 10 refers to the matrix body defining a groove referred to generally by reference numeral 12. The matrix section is provided with two inwardly directed rail elements 14 defined by two pairs of inclined surfaces 16 and 18 which are integral with side panels 20 of the matrix section.

The groove 12 in the matrix section is defined by a back panel 22 and by the two inclined surfaces 16 and 18. The matrix section has a closed bottom 24.

Referring now to Figures 4 and 5 of the drawings showing a patrix section in accordance with the invention, reference numeral 26 refers to a patrix body carrying a tongue element referred to generally by reference numeral 28 for mating with the groove 12 in the matrix section. The tongue element 28 is provided with notches 30 defined by two pairs of inclined surfaces 32 and 34 which respectively mate with the two pairs of inclined surfaces 16 and 18 of the matrix section. In other words, it will be understood that a lateral cross-section through the tongue element 28 will show a profile similar to the groove 12 as shown in Figure 3.

Referring particularly to Figure 5, the patrix section is provided with a split 35 along a portion 37 of the tongue element 28. The split 35 is in substantial alignment with the notches 30 in the tongue element and hence similarly in substantial alignment with the rails 14 of the matrix section. Thus, displacement of the split portion 32 of the tongue element 28 towards the patrix body 26 in the direction of the arrow referred to by reference numeral 39 causes the split portion to clamp against the rail elements 14 of the matrix section. This displacement of the split portion 32 of the tongue element 28 is of course performed preliminary to inserting the tongue element 28 into the groove 12 of the matrix section and may for example be simply performed by applying pressure at the end of the tongue element with a finger or thumbnail or with the aid of a small screw-driver. More conveniently, however, a threaded screw 36 is provided which passes through the split portion 37 of the tongue element 28 into the patrix body 26. In this fashion, the clamping action of the split portion 37 against the rails 14 of the matrix section can be adjusted.

The patrix section comprises a face place 38 which seats against the matrix body 10 and thus closes off the groove 12 in the matrix section. Reference numerals 40 and 42 refer to openings in the patrix body 26 which are concerned with mounting of the patrix section to a dental prosthesis with the aid of a U-bolt.

## Claims

1. A dental attachment comprising a patrix section and a matrix section, the matrix section including a matrix body (10) comprising a back panel (22) and two side panels (20) defining a groove (12), and the patrix section including a patrix body (26) carrying a tongue element (28) for mating with the groove (17) in the matrix section, the patrix section being provided with a split (35) along a portion (37) of the tongue element (28) enabling displacement of the split portion of the tongue element (28) relative to the patrix body (26), characterised in that:

   a. the matrix section is provided with at least one inwardly directed rail element (14) disposed on the inner surface of one of the side panels (20) of the matrix body (10),

   b. the split (35) along the portion (37) of the tongue element (28) extends between the side panels (20) of the matrix body (10) parallel to the back panel (22) when said tongue element (28) is inserted in the groove (12), and

   c. the tongue element (28) is provided with a notch (30) to mate with the inwardly directed, rail element (14) so that displacement of the portion (37) of the tongue element (28) towards the partrix body (26) causes the tongue element (28) to clamp against the rail element (14).

2. A dental attachment according to claim 1, characterized in that two rail elements (14) are provided in the matrix section (10) integral with said side panels (20), the patrix section (26) then being provided with notches (30) at each side of the tongue element (28) for mating with two rail elements (14).

3. A dental attachment according to claims 1 or 2, in which there is provided a threaded screw (36) passing through the split-portion (37) of the tongue element (28) into the body (26) of the partrix section, whereby the clamping action of the tongue element (28) aginst a rail element (14) in the matrix section (10) can be adjusted.

## Revendications

1. Attache dentaire comprenant une partie mâle et une partie femelle, la partie femelle comprenant un corps concave (10) comprenant un panneau arrière (22) et deux panneaux latéraux (20) définissant une rainure (12), et la partie mâle comprenant un corps saillant (26) portant un élément en forme de languette (28) destiné à s'adapter dans la rainure (17) de la partie femelle, la partie mâle comportant une fente (35) s'étendant le long d'une partie (37) de l'élément en forme de languette (28), ce qui permet le déplacement de la partie fendue de l'élément en forme de languette (28) par rapport au corps saillant (26), caractérisée en ce que

   a. la partie femelle comporte au moins un élément en forme de rail (14) dirigé vers l'intérieur et situé sur la surface intérieure de l'un des panneaux latéraux (20) du corps concave (10),

   b. la fente (35) disposée le long de la partie (37) de l'élément en forme de languette (28) s'étend entre les panneaux latéraux (20) du corps concave (10) parallèlement au panneau arrière (22), lorsque ledit élément en forme de languette (28) est inséré dans la rainure (12), et

   c. l'élément en forme de languette (28) comporte une encoche (30) destinée à s'adapter à l'élément de rail (14) dirigé vers l'intérieur, de sorte que le déplacement de la partie (37) de l'élément en forme de languette (28) en direction du corps saillant (26) amène l'élément en forme de languette (28) à se bloquer contre l'élément de rail (14).

2. Attache dentaire selon la revendication 1, caractérisée en ce que deux éléments de rail (14) sont prévus dans la partie femelle (10) en étant réunis d'un seul tenant auxdits panneaux latéraux (20), la partie mâle (26) étant pourvue d'encoches (30) situées de chaque côté de l'élément en forme de languette (28) et destinées à être accouplée aux deux éléments de rail (14).

3. Attache dentaire selon la revendication 1 ou 2, dans laquelle il est prévu une vis (36), qui traverse la partie fendue (37) de l'élément en forme de languette (28) pour pénétrer dans le corps (26) de la partie mâle, ce qui permet d'ajuster l'action de serrage de l'élément en forme de languette (28) contre un élément de rail (14) situé dans la partie femelle (10).

**Patentansprüche**

1.  Zahnbefestigung mit einem Patrixteil und einem Matrixteil, wobei der Matrixteil einen Matrixkörper (10) mit einer Rückwand (22) und zwei Seitenwänden (20) umfaßt, die eine Nut (12) bilden und der Patrixteil einen Patrixkörper (26) umfaßt, der ein Zungenelement (28) trägt, das in die Nut (17) im Matrixteil passt, wobei der Patrixteil mit einem Schlitz (35) längs eines Teils (37) des Zungenelements (28) versehen ist, wodurch die Verschiebung bzw. Bewegung des Schlitzteiles des Zungenelements (28) relativ zum Patrixkörper (26) möglich wird, dadurch gekennzeichnet, daß:
    a. der Matrixteil mit Wenigstens einem nach innen gerichteten Schienenelement (14) versehen ist, das auf der Innenfläche einer der Seitenwände (20) des Matrixkörpers (10) angeordnet ist,
    b. der Schlitz (35) längs des Teils (37) des Zungenelements (28) sich zwischen den Seitenwänden (20) des Matrixkörpers (10) parallel zur Rückwand (22) erstreckt, wenn dieses Zungenelement (28) in die Nut (12) eingeführt ist, und
    c. das Zungenelement (28) mit einer Einkerbung (30) versehen ist, die passend zum nach innen gerichteten Schienenelement (14) ist, so daß eine Bewegung oder Verschiebung des Teils (37) des Zungenelements (28) gegen den Patrixkörper (26) dafür sorgt, daß das Zungenelement (28) gegen das Schienenelement (14) verklemmt.

2.  Zahnbefestigung nach Anspruch 1, dadurch gekennzeichnet, daß die beiden Schienenelemente (14) im Matrixteil (10) integral mit den Seitenwandungen (20) vorgesehen sind, wobei der Patrixteil (26) dann mit Einkerbungen (30) an jeder Seite des Zungenelements (28) zur Einpassung mit zwei Schienenelementen (14) vorgesehen ist.

3.  Zahnbefestigung nach den Ansprüchen 1 oder 2, bei der eine Gewindeschraube (36), die durch den Schlitzteil (37) des Zungenelements (28) in den Körper (26) des Patrixteiles geht, vorgesehen ist, wodurch die Klemmwirkung des Zungenelements (28) gegen ein Schienenelement (14) im Matrixteil (10) eingestellt werden kann.

FIG 1

FIG 2

FIG 3

FIG 4

FIG 5